# EUROPÄISCHE PATENTANMELDUNG

(11) **EP 1 270 340 A2**
(43) Veröffentlichungstag der Anmeldung: **02.01.2003**
(21) Anmeldenummer: 02009349.8
(22) Anmeldetag: 03.05.2002
(51) Int. Cl.: B60R 21/20

(54) **Airbag-Gasgenerator als Schwingungsdämpfermasse**

(30) Priorität: 30.06.2001 DE 10131830
(71) Anmelder: Carl Freudenberg KG, 69469 Weinheim (DE)
(72) Erfinder: Leibach, Markus, 79410 Schweighof (DE); Back, Friedrich, 79379 Müllheim (DE); Dürre, Markus, 87477 Sulzberg (DE); Berg, Thilo, 67578 Gimbsheim (DE)

(57) **Zusammenfassung**

Gasgenerator für einen Airbag am Kraftfahrzeuglenkrad, der beweglich als Schwingungsdämpfermasse über ein gasundurchlässiges, ringförmiges Federelement (5) aus polymerem Material am Airbaggehäuse gehalten wird, wobei der am Behälter (2) für den Gasgenerator angreifende Teil des Federelements (5) mit einem innenliegenden Ring (4) versehen ist, der mit seiner Außenfläche mit dem Federelement (5) durch Vulkanisation verbunden ist und der formschlüssig an das Gehäuse des Gasgenerators angeschlossen ist, dadurch gekennzeichnet, dass der formschlüssige Anschluss des Ringes (4,24) am Behälter (2) als Positionier-Fuge (7,17) ausgebildet ist.

## Beschreibung

### Technisches Gebiet

Die vorliegende Erfindung befasst sich mit einem Gasgenerator für einen Airbag am Kraftfahrzeuglenkrad, der beweglich als Schwingungsdämpfermasse über ein gasundurchlässiges, ringförmiges Federelement aus polymerem Material am Airbaggehäuse gehalten wird, wobei der am Behälter für den Gasgenerator angreifende Teil des Federelements mit einem innenliegenden Ring versehen ist, der mit seiner Außenfläche mit dem Federelement durch Vulkanisation verbunden ist und der formschlüssig an das Gehäuse des Gasgenerators angeschlossen ist.

Solche Schwingungstilger dämpfen die bei Kraftfahrzeugen auftretenden Schwingungen und erhöhen dadurch den Fahrkomfort.

### Stand der Technik

Aus der DE 199 08 915 A1 ist ein Gasgenerator als Schwingungstilger bekannt. Das gasundurchlässige Federelement ist dabei mit seinem einen Rand an einem Verbindungsblech zum Gasgeneratorbehälter und mit seinem anderen Rand mit einem Flansch verbunden, der einen Anschluss an das Airbaggehäuse erlaubt. Derart ausgebildete Schwingungstilger haben eine Reihe von Vorteilen und sind für das vorgesehene Einsatzgebiet gut geeignet.

Einschlägig ist hier auch die ältere Anmeldung DE 199 55 426, die ebenfalls einen Gasgenerator, der als Schwingungsdämpfermasse ausgebildet ist, zum Inhalt hat. Hier ist der Gasgenerator von einem Abstandstopf oder Schutzmantel umgeben, damit der Gasgenerator nicht den darüberliegenden Airbag beschädigen kann. Für die Befestigung des Federelements am Gasgeneratorgehäuse kann das Federelement mit einem innenliegenden Ring versehen sein, der formschlüssig mit dem Gehäuse des Gasgenerators verbunden ist. Diese Ausbildung läßt eine einfache und sichere Verbindung zwischen dem Federelement und dem Gasgeneratorgehäuse zu.

### Darstellung der Erfindung

Obwohl wie bereits oben ausgeführt verschiedene Ausführungsformen für die Verbindung des Federelements mit dem Gasgeneratorbehälter und dem Airbaggehäuse bekannt sind, wird weiter nach Lösungen gesucht, die eine sichere Verbindung zwischen dem Gasgeneratorbehälter und dem Airbaggehäuse unter Zwischenschaltung des Federelements ergeben. Dabei soll zum einen eine möglichst einfache Konstruktion vorliegen, über die leicht die erforderlichen Anschlüsse herstellbar sind und die außerdem möglichst gasdicht ist, damit im Falle einer Auslösung des Gasgenerators keine unkontrollierte Ausströmung von Gasen möglich ist.

Die Lösung der gestellten Aufgabe wird bei einem Gasgenerator der eingangs genannten Art erfindungsgemäß dadurch erreicht, dass der formschlüssige Anschluss des Rings am Behälter als Positionier-Fuge ausgebildet ist. Durch eine solche Positionier-Fuge, die am Gasgeneratorbehälter angebracht den Ring erfasst oder die am Ring selbst vorhanden sein kann und die einen entsprechenden Rand einfasst, kann eine den hohen Sicherheitsanforderungen gerecht werdende und einfach herstellbare Verbindung erreicht werden. Darüber hinaus kann die Positionier-Fuge für die exakte Zentrierung des Gasgenerator-Behälters benutzt werden.

Eine günstige Möglichkeit für eine solche Fugenverbindung wird dadurch hergestellt, dass die Positionier-Fuge in einem an der Außenwand des Behälters angebrachten Flansch liegt, in die der Ring eingefügt ist. Der Ring wird dabei einerseits mit seinem einen Rand an der einen umlaufenden Fugenwand angelegt und andererseits durch Umbördeln von Teilsegmenten oder eines Abschlussrandes des Flansches an die Fugenwand gepresst. Bei dem Umbördeln des Abschlussrandes des Flansches entsteht eine zweite seitliche Fugenwand, die gleichzeitig auch eine Abdichtfunktion übernehmen kann. Es liegen folglich zwei seitliche Fugenwände vor, an welchen die Ränder des Rings dichtend anliegen. In vielen Fällen ist es jedoch auch ausreichend, wenn nur Teilsegmente des Flansches umgebördelt werden, um den Ring in der Fuge zu halten. Diese Teilsegmente können aus dem Flansch herausgeschnittene Lappen sein.

Möglich ist aber auch die Anordnung der Positionier-Fuge im Ring, so dass der am Behälter vorhandene Flansch in diese Fuge eingreift. Hierbei wird der Ring einerseits mit einer seitlichen Fugenwand an den um den Behälter umlaufenden Rand eines Ansatzflansches angelegt und andererseits durch Umbördeln seiner fugenseitigen Kante die andere am Rand des Ansatzflansches anliegende seitliche Fugenwand gebildet. Auch diese Ausführungsform ist leicht zu montieren und ergibt einen sicheren Abschluss gegenüber ungewollten Gasdurchtritten.

Zur Befestigung des Rings am Federelement kann das Federelement an seinem Rand wulstförmig ausgebildet sein. Dabei ist es besonders günstig, wenn das Federelement im Bereich der Verbindung zum Ring eine innenliegende umlaufende Nut bildet. Hierdurch wird das Federungsverhalten des Federelements unterstützt und auch ein bruchsicherer Übergang zwischen dem eigentlichen Federelement und der verstärkenden Wulst für die Befestigung des Rings erreicht. Darüber hinaus lässt diese Nut eine gute Angriffsmöglichkeit für das Bördelwerkzeug zu, wenn die Fuge im Ring selbst angebracht ist.

Um eine platzsparende Anordnung von Ring und Gasgeneratorbehälter zu erreichen, ist der Ring auf seiner Innenfläche frei von Überzügen aus elastischem Material.

Der dem Airbaggehäuse zugewandte Teil des Federelements ist in an sich bekannter Weise mit einem Anschlussflansch versehen. Dieser Anschlussflansch kann mit dem Federelement durch Vulkanisation verbunden sein. Das Federelement selbst wird bevorzugt als hülsenförmiger Kegelstumpf ausgebildet.

Die neue Konstruktion hat den Vorteil, dass ein scharfer Gasgenerator nach oder vor Befüllen mit Treibstoff am Tilger angebunden werden kann.

### Kurzbeschreibung der Zeichnung

Anhand von zwei in der Zeichnung dargestellten Ausführungsbeispielen wird die Erfindung nachstehend näher erläutert.

Es zeigt:
- Fig. 1: Die Ausgestaltung des Gasgeneratorgehäuses in Verbindung mit dem Federelement teilweise in der Seitenansicht und teilweise im Schnitt,
- Fig. 2: das Detail Y aus Fig. 1 vergrößert,
- Fig. 3: teilweise in der Seitenansicht und teilweise im Schnitt den Gasgeneratorbehälter mit dem Federelement, wobei die Fuge im Ring angebracht ist und
- Fig. 4: das Detail X der Fig. 3 in vergrößerter Darstellung.

### Ausführung der Erfindung

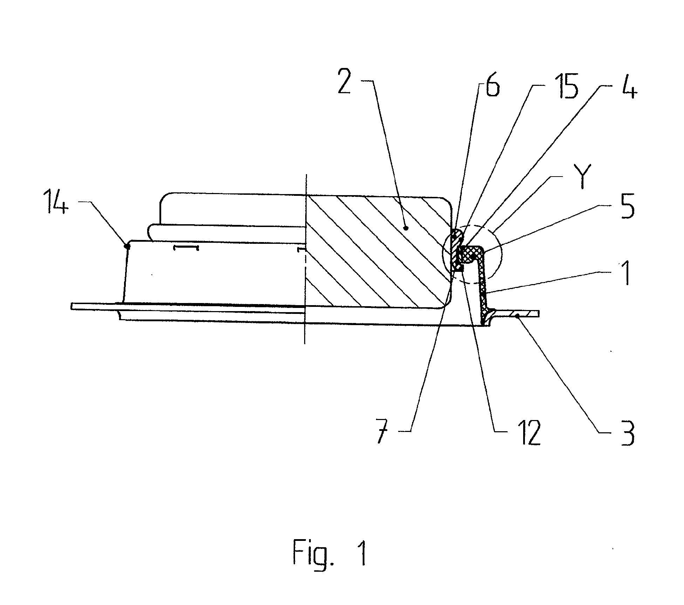

In der Fig. 1 sind lediglich die erfindungswesentlichen Teile dargestellt, nämlich das Federelement 1, der Gasgeneratorbehälter 2, der Anschlussflansch 3 für die Verbindung des Federelements 1 mit einem Airbaggehäuse und der Ring 4 auf der Innenseite des Federelements 1. Airbaggehäuse und Gasgenerator sind weggelassen worden. Der Gasgenerator wird in bekannter Weise im Innenraum des Gehäuses 2 eingesetzt. Der Anschluss des Federelements 1 am Airbaggehäuse erfolgt über den Flansch 3. Das Federelement 1 ist mit dem Flansch 3 durch Vulkanisation verbunden. Das Federelement 1 ist an seinem dem Gasgeneratorbehälter 2 zugewandten Ende mit einer ausgeformten Verdickung 5 versehen, an der der Ring 4 anvulkanisiert ist. Der Gasgeneratorbehälter 2 ist mit dem umlaufenden Flansch 6 ausgestattet, welcher die Fuge 7 enthält, in der der Ring 4 gehalten wird. Die eine seitliche Fugenwand 10 wird durch eine am Flansch 6 vorstehende Wulst 15 gebildet und die andere seitliche Fugenwand 11 durch Umbördeln des unteren Randes 12 des Flansches 6, nachdem der Ring 4 bzw. der Behälter 2 in eine entsprechende Lage zueinander gebracht worden sind.

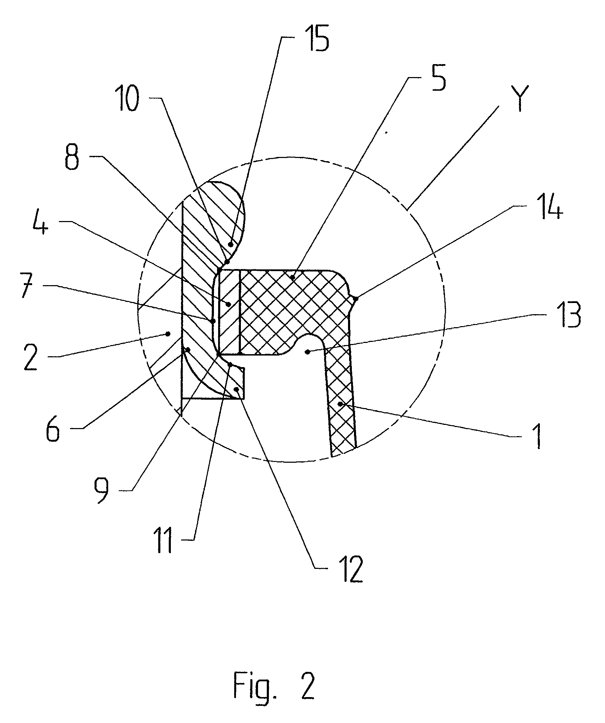

In der Fig. 2 ist in vergrößertem Maßstab das Detail Y der Fig. 1 gezeigt. Der Ring 4 ist an der Verdickung 5 des Federelements 1 anvulkanisiert und liegt in der Fuge 7. Dabei liegen die Kanten 8 und 9 des Ringes 4 gasdicht an den Seitenwänden 10 und 11 der Fuge 7 an. Der untere Rand 12 des Flansches 6 ist umgebördelt, nachdem der Ring 4 mit dem Federelement 1 auf den Flansch 6 aufgesetzt worden ist. Der Übergang zwischen dem eigentlichen Federelement 1 und der Verdickung 5 ist mit einer umlaufenden Nut 13 ausgestattet. Auf der Außenseite der Verdickung 5 sind konzentrisch mehrere Vorsprünge 14 angebracht, die zur Dämpfung von Stößen dienen, sofern das Federelement 1 an dem darüber angeordneten Schutzmantel zum Anschlag kommt.

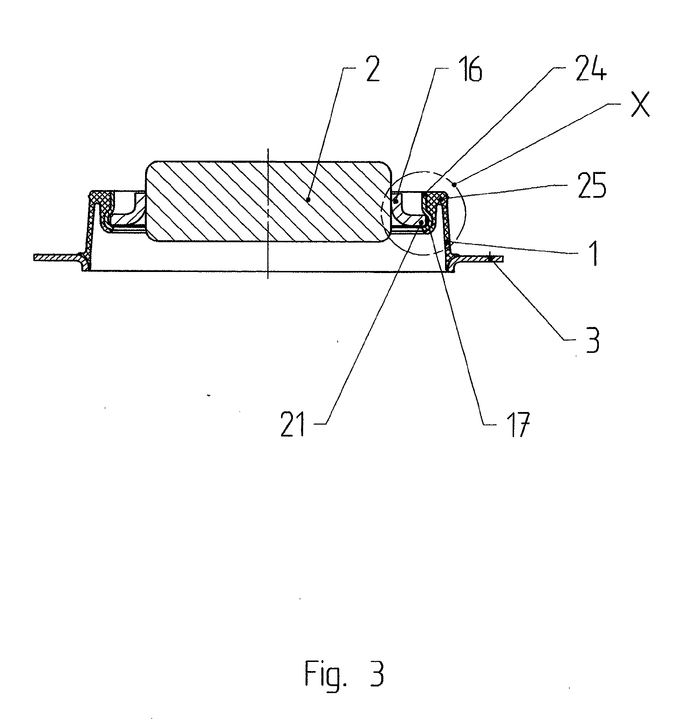

In der Fig. 3 ist eine Ausbildung gezeigt, bei der die Positionier-Fuge 17 im Ring 24 selbst angebracht ist. Soweit das Federelement 1, der Anschlussflansch 3 und der Gasgeneratorbehälter 2 betroffen sind, entsprechen sie der Ausführungsform nach Fig. 1. Eine andere Ausgestaltung hat dagegen der am Behälter 2 befestigte Halteflansch 16, der ringförmig den Behälter 2 umgibt und an seinem unteren Ende einen radial nach außen weisenden Rand 21 hat. Dieser Rand 21 liegt in der Fuge 17, die von dem Ring 24 gebildet worden ist. Der Ring 24 ist an die Verdickung 25 anvulkanisiert. Dabei sind der Ring 24 und die Verdickung 25 zunächst so ausgebildet, dass der Behälter 2 mit dem Flansch 16 in das Federelement 1 mit dem Ring 24 eingeschoben werden kann und erst danach wird der untere Rand 39 des Rings 24 umgebördelt und die Fuge 17 gebildet, welche den unteren Rand 21 des Flansches 16 formschlüssig erfasst.

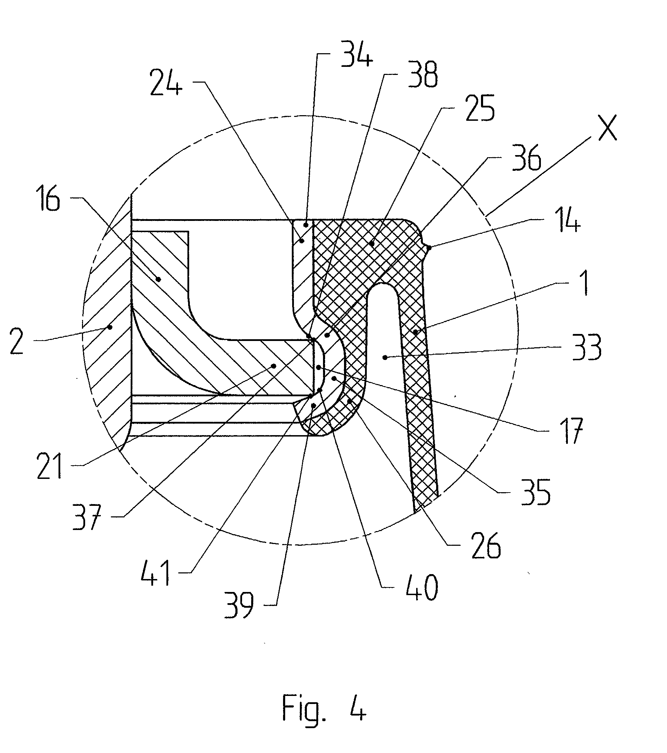

In der Fig. 4 ist das Detail X der Figur 3 im vergrößerten Maßstab gezeigt. Das kegelstumpfartige Federelement 1 hat an seinem oberen Ende die Verdickung 25, an der der Ring 24 anvulkanisiert ist. Die Verdickung 25 ist mit einem nach unten gerichteten Ansatz 26 ausgestattet und zwischen diesem Ansatz 26 und dem eigentlichen Federelement 1 ist die umlaufende Nut 33 vorhanden. Der Ring 24 wird zunächst aus zwei zylindrischen Hälften 34 und 35 gebildet, die über den schräg verlaufenden Absatz 36 miteinander verbunden sind. Nachdem der Behälter 2 mit dem Flansch 16 in das Federelement 1 eingeschoben worden ist, kommt die Kante 37 des abgewinkelten Flanschendes 21 an der seitlichen Fugenwand 38 des Rings 24 zur Anlage. Hiernach wird das untere Ende 39 des Rings 24 umgebördelt, so dass es die zweite seitliche Fugenwand 40 bildet, mit der der Ring 24 an der unteren Kante 41 des Flansches 16 anliegt.

## Patentansprüche

1. Gasgenerator für einen Airbag am Kraftfahrzeuglenkrad, der beweglich als Schwingungsdämpfermasse über ein gasundurchlässiges, ringförmiges Federelement aus polymerem Material am Airbaggehäuse gehalten wird, wobei der am Behälter für den Gasgenerator angreifende Teil des Federelements mit einem innenliegenden Ring versehen ist, der mit seiner Außenfläche mit dem Federelement durch Vulkanisation verbunden ist und der formschlüssig an das Gehäuse des Gasgenerators angeschlossen ist, **dadurch gekennzeichnet, dass** der formschlüssige Anschluss des Ringes (4, 24) am Behälter (2) als Positionier-Fuge (7, 17) ausgebildet ist.

2. Gasgenerator nach Anspruch 1, **dadurch gekennzeichnet, dass** die Positionier-Fuge (7) in einem Flansch (6) an der Außenwand des Behälters (2) angebracht ist und der Ring (4) einerseits an einer umlaufenden seitlichen Fugenwand (10) anliegt und andererseits durch Umbördeln von Teilsegmenten oder eines Abschlussrands (12) des Flansches (6) an die seitliche Fugenwand (10) gepresst wird.

3. Gasgenerator nach Anspruch (2), **dadurch gekennzeichnet, dass** die Teilsegmente aus dem Flansch (6) herausgeschnittene Lappen sind.

4. Gasgenerator nach Anspruch 1, **dadurch gekennzeichnet, dass** die Positionier-Fuge (17) im Ring (24) selbst angebracht ist und dass der Ring (24) einerseits mit einer seitlichen Fugenwand (38) an einem Rand (37) eines um den Behälter (2) umlaufenden Ansatzflansches (16) anliegt und dass andererseits durch Umbördeln seines fugenseitigen Endes (39) die andere am Rand (41) des Ansatzflansches (16) anliegende seitliche Fugenwand (40) gebildet wird.

5. Gasgenerator nach einem der Ansprüche 1 bis 4, **dadurch gekennzeichnet, dass** das Federelement (1) im Bereich der Verbindung zum Ring (4, 24) eine innenliegende, umlaufende Nut (13, 33) bildet.

6. Gasgenerator nach einem der Ansprüche 1 bis 5, **dadurch gekennzeichnet, dass** der Ring (4, 24) auf seiner Innenfläche frei von Überzügen aus elastischem Material ist.

7. Gasgenerator nach einem der Ansprüche 1 bis 6, **dadurch gekennzeichnet, dass** der dem Airbaggehäuse zugewandte Teil des Federelements (1) einen Anschlussflansch (3) hat.

8. Gasgenerator nach Anspruch 7, **dadurch gekennzeichnet, dass** das Federelement (1) mit dem Anschlussflansch (3) durch Vulkanisation verbunden ist.

9. Gasgenerator nach einem der Ansprüche 1 bis 8, **dadurch gekennzeichnet, dass** der Ring (4, 24) eine im Wesentlichen zylindrische Form hat und parallel zur Behälterwand ausgerichtet ist.

10. Gasgenerator nach einem der Ansprüche 1 bis 9, **dadurch gekennzeichnet, dass** das Federelement (1) als hülsenförmiger Kegelstumpf ausgebildet ist.
